Europäisches Patentamt

European Patent Office

Office européen des brevets

(19)

(11) Publication number: **0 080 542**
**B1**

(12) **EUROPEAN PATENT SPECIFICATION**

(45) Date of publication of patent specification: **23.04.86**

(51) Int. Cl.⁴: **F 23 L 15/02,** F 23 J 15/00

(21) Application number: **81305684.3**

(22) Date of filing: **02.12.81**

(54) **Improved heat generator.**

(43) Date of publication of application:
**08.06.83 Bulletin 83/23**

(45) Publication of the grant of the patent:
**23.04.86 Bulletin 86/17**

(84) Designated Contracting States:
**AT BE CH DE FR GB IT LI LU NL SE**

(56) References cited:
**DE-A-2 724 030**
**GB-A- 987 654**
**US-A-2 812 923**
**US-A-4 089 088**
**US-A-4 284 609**

(73) Proprietor: **Monro, Richard J.**
**102 Ramapoo Road**
**Ridgefield Connecticut 06877 (US)**

(72) Inventor: **Monro, Richard J.**
**102 Ramapoo Road**
**Ridgefield Connecticut 06877 (US)**

(74) Representative: **Warden, John Christopher et al**
**R.G.C. Jenkins & Co. 12-15, Fetter Lane**
**London EC4A 1PL (GB)**

EP 0 080 542 B1

## Description

This invention relates to heat generators in which combustible fuels such as fossil fuels, refuse or other materials are burned. More specifically, this invention relates to a method and system for improving the efficiency of such heat generators and particularly for better utilization of heat produced in the thermal section for a large electric power plant using a combustible fuel.

Heat generators using combustible fuels such as oil, coal, gas or refuse materials and the like, generate a substantial quantity of waste materials in the form of pollutant gases and particulates. Federal and state environmental requirements have imposed maximum emission standards for these waste materials. Compliance with these emission standards involves substantial investments for appropriate pollution control equipment, the costs for which can be prohibitively high.

For example, large systems are available to remove particulates using a dry flue gas treatment. Typical devices used for this purpose may involve electrostatic precipitators, bag houses and the like. These devices are suitable for the removal of the particulates, but gaseous pollutants are not removed and as can be appreciated, the addition of these devices increases cost and reduces the efficiency of the heat generator.

The magnitude of gaseous pollutants generated from the combustion of fuel throughout the world is enormous. As a result, many techniques have been described for the removal of these pollutants from flue gases exhausted from heat generators. A general statement of various wet scrubbing processes for pollutant removal from flue gases exhausted from large scale electric power plants can be found in a chapter entitled "Wet Scrubbing Process—$SO_x$ and $NO_x$ Removal Chemistry" by R. G. Nevill, at pages 9—312 of "Energy Technology Handbook" edited by D. M. Considine and published by McGraw-Hill Book Company.

Flue gas wet scrubbing techniques also involve substantial investments with complex systems. For example, in the U.S. Patents 3,320,906 to Domahidy and 3,733,777 to Huntington, wet scrubbers are described in which flue gases are passed through a filter bed for intimate contact with a wash liquid. The wash liquid may be an aqueous bisulfite salt solution such as described in the Huntington patent or such alkaline scrubbing liquors indicated as useful with the wet scrubber described in U.S. Patent 4,049,399 to Teller.

Since corrosive liquid droplets are likely to be entrained by the scrubbed flue gas, special techniques such as described by Teller or in the U.S. Patent to Brandt 3,844,740 may be used to avoid corrosion on subsequent equipment such as an induced draft fan located at the stack where the flue gas is exhausted to atmosphere.

Another technique for the removal of pollutants may involve cooling of the flue gas to such low temperatures that gaseous pollutants such as $SO_2$ and $SO_3$ condense out. One such system is described in the U.S. Patent to Maniya 3,839,849, in which the flue gas is cooled to about 10°C to condense out the sulfurous pollutants after which the flue gas is reheated before discharge to atmosphere.

These and other techniques for the removal of waste materials from flue gas involve a substantial amount of energy, much of which is irretrievably lost. As a result, the overall efficiency, i.e. the energy available for sale from a power plant is significantly reduced.

Techniques for preheating of air have been known and used for many years in connection with boilers to improve combustion. One such preheating technique employs a Ljungstrom air preheater. This uses a rotor through which on one side flue gas is passed while an inflow of combustion air is passed through the other side, with the two gas flows being in opposite directions. Air preheaters, however, are operated at sufficiently high temperatures to avoid condensation inside the heat exchanger of pollutants such as $SO_3$ present in the flue gas.

GB—A—987654 describes an air heater or economiser utilising a tubular heat exchanger in which water is discharged under pressure through nozzles so as to wash both the heating gases and heat exchange surfaces of the device that are exposed to the heating gases for the purpose of removing particulate deposits which otherwise tend to build up in the tubes. The water may be collected in a well and re-circulated and may be applied continuously or at intervals. There is no indication of anything other than a decrease in efficiency resulting from the use of the water nor any indication of condensation and removal of corrosive gases.

In a technique in accordance with the invention for the operation of a heat generator in which combustible fuels are burned, the thermal efficiency is improved by combining the preheating of the air from the heat generator with the removal of pollutants from the flue gas.

For example, as described herein with respect to one embodiment in accordance with the invention for the operation of a heat generator using combustible fuels, both an inflow of air and the flue gas from the combustion are passed through a heat exchanger, which is simultaneously flooded with a scrubbing liquid for removal of particulates and gaseous pollutants in the flue gas. Heat from the flue gas is transferred through the heat exchanger to the inflow of air for its preheating while the flue gas pollutants are removed by collecting the liquid after its passage through the heat exchanger.

The cooling of the flue gas can be carried out to a temperature at which a pollutant may condense out. For example, the flue gas may be cooled in the heat exchanger to a temperature at which $SO_3$ is avoided, yet a substantial part of the $SO_3$ in the flue gas is removed.

It is an object of the invention to improve the thermal efficiency of a heat generator using combustible fuels while removing pollutants from flue gas generated from the generator.

According to one aspect of the invention there is provided a method for operating a heat generator wherein a fuel, containing pollutants, is burned with an inflow of air to generate a hot combustion gas which, after transfer of heat therefrom, exhausts as a flue gas at an elevated temperature and contains particulates and gaseous pollutants, comprising

passing the flue gas and the inflow of air through a heat exchanger for the transfer of heat from the flue gas to said inflow of air for a preheating thereof, wherein the heat exchange relationship with the inflow of air sufficiently reduces the temperature of the flue gas by a transfer of heat therefrom to the inflow of air to obtain an enhanced thermal efficiency of the heat generator, with the temperature of the flue gas being reduced by said transfer of heat by said heat exchanger to a level where at least one of said pollutants condenses out from the flue gas within the heat exchanger and, during said heat exchange,

applying pollutant removing liquid onto the heat exchanger at a location enabling said liquid to remove, from the flue gas, pollutants and particulates while protecting said heat exchanger from removed and condensed corrosive pollutants and particulates.

According to another aspect of the invention there is provided a heat generator wherein a fuel, containing pollutants, is burned with an inflow of air to generate a hot combustion gas which exhausts as a flue gas at an elevated temperature and contains particulates and gaseous pollutants, characterised by

heat exchange means for transferring heat from the flue gas to the inflow of air wherein the heat exchanger has a capacity to reduce the temperature of the flue gas by a transfer of heat therefrom to the inflow of air sufficiently to obtain enhanced thermal efficiency of the heat generator, with the temperature of the flue gas being reduced by said transfer of heat by the heat exchanger means to a level where at least one of said pollutants condenses out from the flue gas within the heat exchange means; and

means for applying during said heat exchange a pollutant removing liquid onto said heat exchange means at a location selected for removal of pollutants and particulates from the flue gas and protection of said heat exchange means against corrosive effects of removed pollutants.

With a technique in accordance with the invention for operating a heat generator, its net thermal efficiency can be significantly increased. The technique can be applied to improve operating efficiencies of existing heat generators such as may be used in electric power plants, steel manufacturing furnaces, sulfur producing plants and the like.

These and other advantages and objects of the invention can be understood from the following description of one illustrative embodiment in accordance with the invention and described in conjunction with the drawings.

Figure 1 is a schematic representation of a conventional thermal section for a power plant; and

Figure 2 is a schematic representation of a thermal section improved in accordance with the invention.

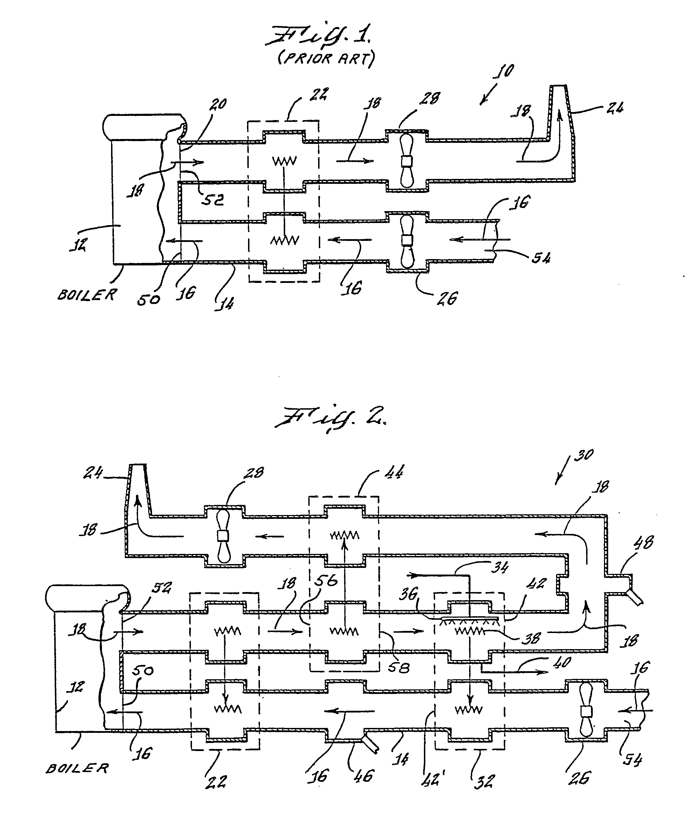

With reference to Figure 1, the thermal section 10 of a conventional power plant is shown with a boiler 12 in which a suitable fuel such as fossil fuel in the form of coal, oil, or gas or other fuel such as a waste material is burned. An inflow of combustion air is provided, as suggested by arrows 16, through suitable ducts 14 into the boiler 12.

The boiler 12 includes suitable heat exchange elements (not shown) in which a working fluid (water or steam) is circulated for heating by the combustion gases generated in the boiler 12. Flue gas, as suggested by arrows 18, emerges at discharge 20 from the boiler 12 at a high temperature, typically in the range of about 650°F 343°C, and is passed through a heat exchanger 22 to preheat the inflow of air 16. After passage through heat exchanger 22, the flue gas 18 is discharged to atmosphere at a stack 24. Air flow through the thermal section 10 is obtained with a forced draft fan 26 and an induced draft fan 28.

The flue gas 18 may include pollutant materials in the form of particulates such as fly ash and gases such as $SO_2$, $SO_3$ and others. Techniques for removal of the pollutants are usually a part of the thermal section 10, though for purposes of simplicity of Figure 1, these pollution controls have been left out of the schematic representation. Suffice it to say that techniques and devices for collecting particulates and pollutant gases from flue gases have been extensively described in the art.

It is generally recognized that, particularly in large electric power plants, the exhaust temperature of the flue gas should preferably be kept above the dew point of the $SO_3$ to avoid corrosive effects from contact by precipitated $SO_3$ with equipment such as the induced draft fan 28. Hence, the amount of heat recaptured from the flue gas is usually limited to maintain the flue gas temperature above the $SO_3$ dew point, i.e. at about 300°F (149°C). As a result, the temperature of the inflow of air 16 at the boiler 12 is usually about 450°F (232°C) and the thermal efficiency of thermal section 10 is not as high as it could theoretically be made.

With a technique for operating a heat generator in accordance with the invention, a substantially greater amount of heat from flue gas is recaptured to achieve a high thermal efficiency while simultaneously extracting pollutants. This can be achieved with a thermal section 30 as described for a power plant as illustrated in Figure 2.

In Figure 2, the flue gas 18, after passage through preheater 22, is passed through a heat exchanger 32 where a substantial portion of the heat in the flue gas 18 is extracted for transfer to the inflow of air 16.

The heat exchanger 32 operates with a working liquid which is applied through an inlet 34 from a supply (not shown) to sprayers 36 into the heat exchanger portion 38 through which the flue gas 18 is passed. The sprayers 36 flood portion 38 to enable intimate and direct contact between the flue gas and the liquid. The liquid is applied in such volume as to collect particulates in the flue gas while also acting as a protective sheath for the heat exchanger to prevent its damage from corrosive constituents in the flue gas.

The liquid is preferably formed with ingredients suitable for absorbing the neutralizing various pollutants in the flue gas. These pollutants may be $SO_2$, $SO_3$ and others, for which absorption and neutralizing techniques are well known, see for example, some of the aforementioned prior art publications. An alkaline wash liquid may be used to, for example, neutralize condensed $SO_3$ and absorb $SO_2$.

In some cases the heat exchanger 32 may be sprayed with a powder at the same time that the liquid is applied. The powder may be of a type which neutralizes corrosive components. Use of such powders to protect heat exchangers against corrosion is known in the art.

While recuperative, regenerative, and heat pump types of heat exchangers 32 can be used, the heat exchanger 32 preferably is of the rotary regenerative type. The large surface area in such heat exchangers enhances mixing and contact of flue gas pollutants with the absorbent alkaline wash liquid. The flue gas 18 in such case is passed through a hot zone portion of a rotor used in heat exchanger 32 and the liquid spray is directed at that hot zone with a flow rate selected to prevent a build-up of particulates and corrosive effects from condensed and absorbed pollutants. The spent liquid is collected at a drain 40 for processing in a suitable conventional scrubbing cycle.

Sufficient heat is transferred from the flue gas by the rotor in the rotary heat exchanger 32 to the inflow of air 16 to increase the latter's temperature significantly while the flue gas 18 is considerably cooled when it emerges at the outlet 42 of heat exchanger 32.

The flue gas temperature may in fact be so low that if discharged to atmosphere, the water vapor in the flue gas would create a visible plume. Since this is undesirable, a visibility suppression technique is used whereby the flue gas 18 from heat exchanger 32 is reheated with a heat exchanger 44, which thus also promotes rise of the flue gas from the stack. Appropriate moisture separators 46, 48 are placed at the outlets 42, 42' of heat exchanger 32 to collect and enable removal of droplets entrained by the gas flow through heat exchanger 32.

A significant improvement in the overall efficiency of the thermal section 30 is obtained with a heat exchanger such as 32 with which a substantial portion of heat in the flue gas 18 is recovered while pollutants are removed and the heat exchanger 32 is protected against corrosive effects of the removed pollutants. The thermal efficiency of the heat generator may be increased by about three-and-a-half percent (3.5%). The net thermal efficiency, i.e. after allowing for additional energy requirements to implement the improvement of the invention, being about two and six-tenth of a percent (2.6%). In addition, less costly high sulfur containing fossil fuels may be used so that the operating costs of the thermal section 30 can be significantly reduced.

As a result of the thermal efficiency improvement, the temperature of the inflow of air 16 to the boiler 12 at 50 is increased. It is estimated that the air flow can be raised to within 50°F (10°C) or even less of the temperature of the flue gas 18 at the outlet 52 of boiler 12.

The efficiency advantage of the invention can be illustrated with the following table of normal temperatures encountered in the prior art system of Fig. 1 in comparison with temperatures estimated to be generated in a system of Figure 2.

Temperatures

| Places | Figure 1 | Figure 2 |
|---|---|---|
| At air inlet 54 | 70°F (21°C) | 70°F (21°C) |
| At outlet 42' | -na- | 266°F (130°C) |
| At boiler inlet 50 | 450°F (232°C) | 630°F (332°C) |
| At boiler outlet 52 | 650°F (343°C) | 650°F (343°C) |
| At reheater inlet 56 | -na- | 320°F (160°C) |
| At reheater outlet 58 | -na- | 300°F (149°C) |
| At outlet 42 | -na- | 120°F (48.5°C) |
| At stack 24 | 300°F (149°C) | 140°F (60°C) |

Having thus described an illustrative embodiment in accordance with the invention for improving the efficiency of the thermal section for a power plant, the advantages of the invention can be appreciated. The invention can be advantageously used for different heat generators such as those used in blast furnaces, municipal waste burning plants, chemical processes and the like. Variations from the described embodiment can be made, such as in the selection of the washing liquid and the heat exchangers.

**Claims**

1. A method for operating a heat generator wherein a fuel, containing pollutants, is burned with an inflow of air (16) to generate a hot combustion gas which, after transfer of heat therefrom, exhausts as a flue gas (18) at an elevated temperature and contains particulates and gaseous pollutants, comprising

passing the flue gas (18) and the inflow of air (16) through a heat exchanger (22), (32) for the transfer of heat from the flue gas to said inflow of air for a preheating thereof, wherein the heat exchange relationship with the inflow of air sufficiently reduces the temperature of the flue gas by a transfer of heat therefrom to the inflow of air to obtain an enhanced thermal efficiency of the heat generator, with the temperature of the flue gas being reduced by said transfer of heat by said heat exchanger to a level where at least one of said pollutants condenses out from the flue gas within the heat exchanger and, during said heat exchange,

applying pollutant removing liquid (36) onto the heat exchanger (32) at a location (38) enabling said liquid to remove pollutants and particulates while protecting said heat exchanger from removed and condensed corrosive pollutants and particulates.

2. A method according to claim 1 wherein the condensed pollutant includes $SO_3$.

3. A method as set forth in claims 1 or 2 wherein the step of applying said liquid includes applying a liquid which neutralises and absorbs pollutants from said flue gas (18) in said heat exchanger (32).

4. A method as set forth in any preceding claim and further comprising

passing flue gas (18) from which said pollutants and particulates have been removed in heat exchange relationship (44) with the flue gas (18) available prior to said removal step to reheat said pollutant and particulate depleted flue gas to a temperature sufficiently high for the suppression of a plume upon discharge of flue gas to atmosphere.

5. A method as set forth in any preceding claim wherein said flue gas (18) is passed through a hot zone portion of a rotary regenerative heat exchanger.

6. A method as set forth in claim 5 characterised in that said liquid is directed at that hot zone with a flow rate selected to prevent a build-up of particulates and corrosive effects from condensed and absorbed pollutants.

7. A method as set forth in any preceding claim including the steps of

separating moisture (46) entrained by the inflow of air (16) emerging from the heat exchanger (32); and

separating moisture (48) entrained by flue gas (18) emerging from the heat exchanger (32).

8. A method as set forth in any preceding claim wherein said liquid is formed of an alkaline neutralising solution.

9. A method as set forth in any preceding claim used for operating a heat generator in a large electrical power plant.

10. A method as set forth in claim 9 wherein said step of transferring heat to the inflow of air (16) includes the raising of the temperature of the inflow of air (16) to a level generally within about fifty degrees fahrenheit (10°C) of the temperature of said flue gas where it exhausts from said boiler.

11. A method according to any preceding claim wherein the flue gas temperature is reduced to about 120°F (48.5°C).

12. A heat generator wherein a fuel, containing pollutants, is burned with an inflow of air (16) to generate a hot combustion gas which exhausts as a flue gas (18) at an elevated temperature and contains particulates and gaseous pollutants, characterised by

heat exchange means (32) for transferring heat from the flue gas (18) to the inflow of air (16) wherein the heat exchanger has a capacity to reduce the temperature of the flue gas by a transfer of heat therefrom to the inflow of air sufficiently to obtain enhanced thermal efficiency of the heat generator, with the temperature of the flue gas being reduced by said transfer of heat by the heat exchanger means to a level where at least one of said pollutants condenses out from the flue gas within the heat exchange means; and

means (36) for applying during said heat exchange a pollutant removing liquid onto said heat exchange means (32) at a location (38) selected to enable removal of pollutants and particulates from the flue gas and protection of said heat exchange means against corrosive effects of removed pollutants.

13. A heat generator as set forth in claim 12 wherein the condensed pollutant includes $SO_3$.

14. A heat generator as set forth in claim 12 or 13 wherein said heat transferring means is a rotary heat exchanger having a hot zone through which said flue gas is passed, and wherein said liquid applying means is arranged to spray the liquid at said hot zone.

15. A heat generator as set forth in any of claims 12 to 14 including moisture separators (46, 48) respectively located in the path of the air inflow (16) and the flue gas (18) as they emerge from said heat exchanger.

16. A heat generator as set forth in any of claims 12 to 15 wherein the heat exchanger is arranged to reduce the flue gas temperature to about 120°F (48.5°C).

**Patentansprüche**

1. Verfahren zum Betreiben eines Wärmeerzeugers, in dem ein Schadstoffe enthaltender Brennstoff mit einem Zustrom von Luft (16) zur Erzeugung eines heißen Verbrennungsgases verbrannt wird, welches nach einem Wärmeübergang von diesem als ein Rauchgas (18) mit erhöhter Temperatur abströmt und Schwebstoffteilchen sowie gasförmige Schadstoffe enthält, gekennzeichnet durch Führen des Rauchgases (18) und des Zustroms von Luft (16) durch einen Wärmetauscher (22), (32) zur Wärmeübertragung vom Rauchgas auf den Zustrom von Luft zu deren Vorwärmung, wobei der Wärmetauschvorgang mit dem Zustrom von Luft die Temperatur des Rauchgases durch übergang von Wärme von diesem auf dem Zustrom von Luft ausreichend absenkt, um einen erhöhten thermischen Wirkungsgrad des Wärmeerzeugers zu erlangen, und wobei die Temperatur des Rauchgases durch die Wärmeübertragung mittels des Wärmetauschers auf ein Niveau vermindert wird, bei welchem wenigstens einer der Schadstoffe innerhalb des Wärmetauschers sich aus dem Rauchgas auskondensiert, und durch Aufbringen während des Wärmetausches einer Schadstoffe abscheidenden Flüssigkeit (36) auf den Wärmetauscher (32) an einer Stelle (38), die der Flüssigkeit ermöglicht, Schadstoffe und Schwebstoffteilchen zu entfernen, während der Wärmetauscher gegenüber den entfernten und kondensierten korrosiven Schadstoffen sowie Schwebstoffteilchen geschützt wird.

2. Verfahren nach Anspruch 1, dadurch gekennzeichnet, daß der kondensierte Schadstoff $SO_3$ enthält.

3. Verfahren nach Anspruch 1 oder 2, dadurch gekennzeichnet, daß der Schritt des Aufbringens von Flüssigkeit das Aufbringen einer Flüssigkeit, die Schadstoffe aus dem Rauchgas (18) in dem Wärmetauscher (32) neutralisiert und absorbiert, umfaßt.

4. Verfahren nach einem der vorhergehenden Ansprüche, gekennzeichnet durch Führen von Rauchgas (18), aus dem Schadstoffe und Schwebstoffteilchen entfernt worden sind, in wärmetauschender Beziehung (44) mit dem vor dem Entfernungsschritt verfügbaren Rauchgas (18), um das an Schadstoffen und Schwebstoffteilchen verarmte Rauchgas auf eine Temperatur wiederzuerwärmen, die für die Unterdrückung einer Rauchfahne bei Ausstoß von Rauchgas in die Atmosphäre ausreichend hoch ist.

5. Verfahren nach einem der vorhergehenden Ansprüche, dadurch gekennzeichnet, daß das Rauchgas (18) durch einen heißen Zonenteil eines Dreh-Regenerativwärmetauschers geführt wird.

6. Verfahren nach Anspruch 5, dadurch gekennzeichnet, daß die Flüssigkeit auf die heiße Zone in einer Strömungsmenge, die zur Verhinderung eines Aufbaus von Schwebstoffteilchen und korrodierenden Einwirkungen aus kondensierten sowie absorbierten Schadstoffen ausgewählt ist, geleitet wird.

7. Verfahren nach einem der vorhergehenden Ansprüche, gekennzeichnet durch die Schritte des Abscheidens von durch den Zustrom von Luft (16), die aus dem Wärmetauscher (32) austritt, mitgeführter Feuchtigkeit (46) und des Abscheidens von durch das Rauchgas (18), das aus dem Wärmetauscher (32) austritt, mitgeführter Feuchtigkeit (48).

8. Verfahren nach einem der vorhergehenden Ansprüche, dadurch gekennzeichnet, daß die Flüssigkeit von einer alkalischen, neutralisierenden Lösung gebildet wird.

9. Verfahren nach einem der vorhergehenden Ansprüche in Anwendung auf das Betreiben eines Wärmeerzeugers in einer Großkraftwerksanlage.

10. Verfahren nach Anspruch 9, dadurch gekennzeichnet, daß der Schritt des Übertragens von Wärme auf den Zustrom von Luft (16) das Anheben der Temperatur des Zustroms von Luft (16) auf ein Niveau, das im allgemeinen im Bereich von etwa 50°F (10°C) der Temperatur des Rauchgases bei seinem Austritt aus dem Kessel liegt, umfaßt.

11. Verfahren nach einem der vorhergehenden Ansprüche, dadurch gekennzeichnet, daß die Rauchgastemperatur um etwa 120°F (48,5°C) vermindert wird.

12. Wärmeerzeuger, in dem ein Schadstoffe enthaltender Brennstoff mit einem Zustrom von Luft (16) zur Erzeugung eines heißen Verbrennungsgases verbrannt wird, welches als ein Rauchgas (18) mit erhöhter Temperatur abströmt und Schadstoffteilchen sowie gasförmige Schadstoffe enthält, gekennzeichnet durch eine Wärmetauscheinrichtung (32) zur Übertragung von Wärme von dem Rauchgas (18) auf den Zustrom von Luft (16), wobei der Wärmetauscher eine Kapazität hat, um die Temperatur des Rauchgases durch eine Übertragung dessen Wärme auf den Zustrom von Luft ausreichend herabzusetzen, um einen erhöhten thermischen Wirkungsgrad des Wärmeerzeugers zu erlangen, und wobei die Temperatur des Rauchgases durch die Wärmeübertragung mittels der Wärmetauschereinrichtung auf ein Niveau abgesenkt wird, bei dem wenigstens einer der Schadstoffe sich aus dem Rauchgas innerhalb der Wärmetauscheinrichtung auskondensiert, und durch eine Einrichtung (36) zum Aufbringen einer Schadstoffe entfernenden Flüssigkeit auf die Wärmetauscheinrichtung (32) während des Wärmetausches an einer Stelle (38), die so ausgewählt ist, daß ein Entfernen von Schadstoffen und Schwebstoffteilchen aus dem Rauchgas und ein Schutz der Wärmetauscheinrichtung gegen korrosive Einwirkungen der entfernten Schadstoffe möglich ist.

13. Wärmeerzeuger nach Anspruch 12, dadurch gekennzeichnet, daß der kondensierte Schadstoff $SO_3$ enthält.

14. Wärmeerzeuger nach Anspruch 12 oder 13, dadurch gekennzeichnet, daß die Wärmeübertragungseinrichtung ein Dreh-Wärmetauscher ist, der eine heiße Zone hat, durch die das Rauchgas geführt wird, und daß die Einrichtung zum Aufbringen der Flüssigkeit für ein Aufsprühen der Flüssigkeit auf die heiße Zone eingerichtet ist.

15. Wärmeerzeuger nach einem der Ansprüche 12 bis 14, gekennzeichnet durch Feuchtigkeitsabscheider (46, 48), die jeweils im Weg der zuströmenden Luft (16) und des Rauchgases (18), wenn diese aus dem Wärmetauscher austreten, liegen.

16. Wärmeerzeuger nach einem der Ansprüche 12 bis 15, dadurch gekennzeichnet, daß der Wärmetauscher dazu eingerichtet ist, die Rauchgastemperatur auf etwa 120°F (48,5°C) herabzusetzen.

## Revendications

1. Procédé d'exploitation d'un générateur de chaleur dans lequel la combustion d'un combustible, contenant des éléments polluants, est réalisée avec une arrivée d'air (16) pour produire un gaz de combustion chaud qui, après transfert de sa chaleur, s'échappe en gaz de fumée (18) à une température élevée et contient des matières particulaires et des éléments polluants gazeux, comportant:

— le passage du gaz de fumée (18) et de l'arrivée d'air (16) dans un échangeur de chaleur (22), (32) en vue du transfert de la chaleur du gaz de fumée à ladite arrivée d'air pour le préchauffage de ce dernier, dans lequel la relation d'échange thermique avec l'arrivée d'air réduit de façon suffisante la température du gaz de fumée par un transfert de la chaleur de celui-ci à l'arrivée d'air pour augmenter le rendement thermique du générateur de chaleur, la température du gaz de fumée étant réduite lors de ce transfert de chaleur par ledit échangeur de chaleur à un niveau auquel l'un au moins desdits éléments polluants est éliminé du gaz de fumée par condensation dans l'échangeur de chaleur et, au cours de cet échange thermique;
— l'application d'un liquide extracteur d'éléments polluants (36) dans l'échangeur de chaleur (32) en un point (38) permettant à ce liquide d'éliminer les éléments polluants et les matières particulaires tout en protégeant l'échangeur de chaleur contre les éléments polluants et les matières particulaires corrosifs éliminés et condensés.

2. Procédé selon la revendication 1, dans lequel l'élément polluant condensé contient du $SO_3$.

3. Procédé selon les revendications 1 ou 2, dans lequel la phase d'application dudit liquide comporte:

— l'application d'un liquide qui neutralise et absorbe les éléments polluants dudit gaz de fumée (18) dans ledit échangeur de chaleur (32).

4. Procédé selon l'une quelconque des revendications précédentes, comprenant également:

— le passage du gaz de fumée (18) dont lesdits éléments polluants et matières particulaires ont été éliminé dans l'échangeur de chaleur (44) avec le gaz de fumée (18) tel qu'avant cette phase d'extraction pour réchauffer ledit gaz de fumée débarrassé des éléments polluants et des matières particulaires à une température suffisamment élevée en vue de la suppression d'une colonne d'eau lors de l'évacuation du gaz de fumée à l'atmosphère.

5. Procédé selon l'une quelconque des revendications précédentes, dans lequel le gaz de fumée (18) passe dans une portion de zone chaude d'un échangeur de chaleur rotatif à régénération.

6. Procédé selon la revendication 5, dans lequel ledit liquide est dirigé sur cette zone chaude à un débit calculé pour prévenir l'accumulation de matières particulaires et les effets corrosifs des éléments polluants condensés et absorbés.

7. Procédé selon l'une quelconque des revendications précédentes, comportant les phases de:

— séparation de l'humidité (48) entraînée par le gaz de fumée (16) sortant de l'échangeur de chaleur (32).

8. Procédé selon l'une quelconque des revendications précédentes, dans lequel ledit liquide est constitué d'une solution alcaline neutralisante.

9. Procédé selon l'une quelconque des revendications précédentes utilisé pour l'exploitation d'un générateur de chaleur dans une grande centrale électrique.

10. Procédé selon la revendication 9, dans lequel la phase de transfert de chaleur de l'arrivée d'air (16) comporte l'élévation de la température de l'arrivée d'air (16) à un niveau qui se situe généralement à cinquante degrés Farenheit (10°C) près de la température dudit gaz de fumée à son point de sortie de la chaudière.

11. Procédé conforme à l'une quelconque des revendications précédentes dans lequel la température du gaz de fumée est réduite à environ 120°F (48,5°C).

12. Générateur de chaleur dans lequel la combustion d'un combustible, contenant des éléments polluants, est réalisée avec une arrivée d'air (16) pour produire un gaz de combustion chaud qui s'échappe en gaz de fumée (18) à une température élevée et contient des matières particulaires et des éléments polluants gazeux caractérisé par:

— des moyens d'échange thermique pour le transfert de chaleur du gaz de fumée (18) à l'arrivée d'air, permettant à l'échangeur de chaleur de réduire la température du gaz de fumée par un transfert de chaleur de ce dernier à l'arrivée d'air en quantité suffisante pour augmenter le rendement thermique du générateur de chaleur, la température du gaz de fumée étant réduite par ledit transfert de chaleur à l'aide des moyens d'échange thermique à un niveau auquel l'un au moins desdits éléments polluants s'extrait du gaz de fumée par condensation à l'intérieur des moyens d'échange thermique; et
— des moyens (36) pour appliquer, lors dudit échange thermique, un liquide extracteur d'éléments polluants sur ces moyens d'échange thermique (32) en un point (38) choisi pour permettre l'élimination des éléments polluants et des matières particulaires du gaz de fumée et la protection desdits moyens d'échange thermique contre les effets corrosifs des éléments polluants éliminés.

13. Générateur de chaleur selon la revendication 12, dans lequel l'élément polluant condensé contient du $SO_3$.

14. Générateur de chaleur selon la revendication 12 ou 13, dans lequel lesdits moyens de transfert thermique sont un échangeur de chaleur rotatif pourvu d'une zone chaude à travers laquelle passe le gaz de fumée, et lesdits moyens d'application du liquide sont disposés pour pulvériser le liquide sur ladite zone.

15. Générateur de chaleur selon l'une quelconque des revendications 12 à 14, comportant des séparateurs d'humidité (46, 48) situés respectivement sur le chemin de l'arrivée d'air (16) et du gaz de fumée (18) à leur sortie dudit échangeur de chaleur.

16. Générateur de chaleur selon l'une quelconque des revendications 12 à 15, dans lequel l'échangeur de chaleur est conçu pour réduire la température du gaz de fumée à environ 120°F (48,5°C).

0 080 542

*Fig. 1.*
(PRIOR ART)

*Fig. 2.*

1